# EUROPÄISCHE PATENTSCHRIFT

(11) **EP 3 946 889 B1**
(45) Veröffentlichungstag und Bekanntmachung des Hinweises auf die Patenterteilung: **07.06.2023**
(21) Anmeldenummer: 20715052.5
(22) Anmeldetag: 27.03.2020
(51) Int. Cl.: B29C 49/48, B29C 49/06, B29K 67/00, B29L 31/00, B29K 23/00

(54) **BLASFORMWERKZEUG UND VERFAHREN ZUR THERMISCHEN BEHANDLUNG EINES TEILBEREICHES EINER OBERFLÄCHE EINES KUNSTSTOFFBEHÄLTERS**
BLOW MOULDING TOOL AND METHOD FOR THERMALLY PROCESSING A SUBREGION OF A SURFACE OF A PLASTIC CONTAINER
OUTIL DE MOULAGE PAR SOUFFLAGE ET PROCÉDÉ POUR LE TRAITEMENT THERMIQUE D'UNE ZONE PARTIELLE D'UNE SURFACE D'UN RÉCIPIENT EN PLASTIQUE

(30) Priorität: 29.03.2019 CH 4132019
(43) Veröffentlichungstag der Anmeldung: 09.02.2022
(73) Patentinhaber: ALPLA Werke Alwin Lehner GmbH & Co. KG, 6971 Hard (AT)
(72) Erfinder: KÜNZ, Johann, 6971 Hard Vorarlberg (AT); BOHLE, Thomas, 6861 Alberschwende Vorarlberg (AT); EYRICH, Andre, 6912 Hörbranz Vorarlberg (AT)
(74) Vertreter: Bohest AG Branch Ostschweiz
(86) Internationale Anmeldenummer: PCT/EP2020/058665
(87) Internationale Veröffentlichungsnummer: WO 2020/201062

(56) Entgegenhaltungen:
- EP-A1- 2 703 146
- WO-A1-00/27612
- US-A1- 2010 252 963
- US-A1- 2011 298 162

## Beschreibung

Die Erfindung betrifft ein Blasformwerkzeug für eine Blasformmaschine sowie ein Verfahren zur thermischen Behandlung eines Teilbereiches einer Oberfläche eines Kunststoffbehälters.

Ein- oder mehrschichtige Kunststoffbehälter beispielsweise aus Polyolefinen werden oft in einem Extrusionsblasverfahren, insbesondere in einem Schlauchblasverfahren hergestellt. Dabei wird mit einem Extrusionskopf üblicherweise kontinuierlich ein Kunststoffschlauch extrudiert, der ein- oder mehrschichtig ausgebildet sein kann. Der Kunststoffschlauch wird abschnittsweise in eine Formkavität, auch bekannt als Formnest, eines Blasformwerkzeugs eingebracht, durch ein mit Überdruck eingebrachtes Blasmedium in die gewünschte Form gebracht, abgekühlt und entformt. Das Blasformwerkzeug besteht üblicherweise aus zwei Blasformhälften, in denen jeweils eine Hälfte der Formkavität ausgebildet ist. Die Blasformhälften werden periodisch geöffnet, geschlossen und wieder geöffnet, um einen Schlauchabschnitt in die Formkavität einzubringen und nach dem Aufblasen den fertigen Behälter wieder zu entformen.

Ein weiteres, sehr häufig eingesetztes Herstellverfahren für Kunststoffbehälter stellt das Streckblasen dar. Bei diesem Verfahren wird ein sogenannter Preform, der meist eine längliche, röhrchenartige Gestalt besitzt, an seinem einen Längsende einen Boden und am anderen Längsende einen Halsbereich mit ausgeformten Befestigungselementen für eine Verschlusskappe, beispielsweise Gewindeabschnitte, in eine Formkavität eines Blasformwerkzeugs eingesetzt und durch ein mit Überdruck eingebrachtes Blasmedium in die gewünschte Form gebracht. Dabei wird der Preform zusätzlich mit einem durch die Halsöffnung eingefahrenen Reckdorn in axiale Richtung gereckt. Nach dem Streck-/Blasvorgang wird der fertige Kunststoffbehälter abgekühlt und aus dem Blasformwerkzeug entformt.

Der ein- oder mehrschichtige Preform wird vor dem Streckblasprozess typischerweise in einem separaten Spritzgiessverfahren hergestellt. Es ist auch schon vorgeschlagen worden, Preforms in einem Kunststoffpressformverfahren oder durch einen Extrusionsblasprozess herzustellen. Als Rohstoff für die Herstellung von Kunststoffbehältern im Streckblasprozess kommen vor allem Polyethylenterephthalat (PET) und ähnliche Materialien, wie z.B. Polyethylenfuranoat (PEF) oder Polyolefine, wie z.B. Polypropylen (PP), High Density Polyethylen (HDPE) oder Low Density Polyethylen (LDPE) zum Einsatz. Im sogenannten Einstufen-Streckblasprozess wird der Preform unmittelbar nach seiner Herstellung in die Formkavität des Blasformwerkzeugs eingesetzt und zu einem Kunststoffbehälter aufgeblasen und gereckt. Vielfach werden die Kunststoffbehälter jedoch in einem zweistufigen Verfahren hergestellt. Dabei werden in einem ersten Schritt die Preforms hergestellt und für die spätere Verwendung zwischengelagert. Beim späteren Streckblasprozess werden die Preforms zunächst wieder erwärmt, in die Formkavität eines Blasformwerkzeugs eingebracht, mit einem Reckdorn in Längsrichtung gestreckt und üblicherweise durch Überdruck zu einem Kunststoffbehälter gemäss der Formkavität aufgeblasen. Auf diese Weise können beide Prozesse, das Spritzgiessen und das Streckblasen, separat und optimal betrieben werden.

Auch beim Streckblasprozess wird üblicherweise ein Blasformwerkzeug eingesetzt, das aus zwei Blasformhälften besteht, in denen jeweils ein Teil der Formkavität ausgebildet ist. Ein zweiteiliges Blasformwerkzeug ist beispielsweise in der EP 2 703 146 A1 offenbart.

Die Blasformhälften werden periodisch geöffnet, geschlossen und wieder geöffnet, um den Preform einzusetzen, aufzublasen und zu recken und den fertigen Kunststoffbehälter zu entformen.

Der extrudierte Schlauch und auch der Preform werden in ihren jeweiligen Verfahren einheitlich als Vorformling bezeichnet.

Damit der Vorformling beim Einsetzen in die Formkavität des Blasformwerkzeugs keinen Temperaturschock erleidet, der zu einem bereichsweisen Ausfrieren des Kunststoffmaterials führen und eine weitere optimale Verformung im Blasprozess behindern könnte, sollten die formgebenden Innenflächen, also insbesondere die Innenwandungen der Formnester, des Blasformwerkzeugs beim Einsetzen des Vorformlings, eine Temperatur aufweisen, die sich nicht wesentlich von der Temperatur des Schlauchs unterscheidet. Das heisst, die Temperatur der Innenflächen des Blasformwerkzeuges weichen im Zeitpunkt des Einsetzens des Vorformlings vorzugsweise nicht mehr als rund 10% von der Temperatur des Vorformlings ab. Polyolefine werden typischerweise bei einer Temperatur von 180° Celsius mit einer Abweichung von bis zu 20° K eingesetzt, Polyethylenterephthalat wird typischerweise bei Temperaturen von 240° Celsius bis 280° Celsius mit einer Abweichung von bis zu 20° K eingesetzt. Andererseits muss das Blasformwerkzeug am Ende des Blasprozesses, vor dem Entformen des hergestellten Kunststoffbehälters soweit herunter gekühlt sein, dass der Polymerisierungsvorgang des Kunststoffmaterials weitgehend abgeschlossen ist und es beim weiteren Behandeln des Kunststoffbehälters zu keinen unterwünschten Verformungen mehr kommen kann.

Polyolefine werden typischerweise bei ca. 60° Celsius entformt wobei die Temperatur am Hals noch bei ca. 80° Celsius liegt und Polyethylenterephtalat bei ca. 30° Celsius, wobei der Hals- und Bodenbereich eine höhere Temperatur von rund 60° Celsius aufweisen kann. Damit entsteht eine entsprechend hohe Temperaturdifferenz während des Blasformvorgangs.

Blasformwerkzeuge sind üblicherweise mehrteilig aufgebaut und bestehen meist aus Aluminium oder Stahl oder auch aus Buntmetallen. Die beiden Blasformhälften eines Blasformwerkzeugs weisen jeweils einen Formkörper auf, in dem wenigstens ein Formnest ausgebildet ist. Der Formkörper ist auf einer Grundplatte aus Stahl montiert, die Bestandteil der Schliesseinheit der Blasformmaschine ist. Wegen der beim Blasformprozess auftretenden Drücke müssen die Grundplatten und die Formkörper relativ massiv ausgebildet sein. Aus dem Spritzgiessverfahren sind Formwerkzeuge bekannt, die sehr ähnlich aufgebaut sind, jedoch eine deutlich massivere Ausgestaltung aufweisen, um den beim Spritzgiessen auftretenden Drücken, die um ein Vielfaches höher sind als bei Blasformverfahren, standzuhalten.

Berücksichtigt man die relativ guten Wärmeleiteigenschaften der einzelnen Komponenten bei Blasformwerkzeugen, ist unmittelbar einsichtig, dass ein sehr grosser Aufwand für das periodische Aufheizen und Abkühlen der Blasformwerkzeuge getrieben werden muss, um einigermassen akzeptable Zykluszeiten zu erreichen und gleichzeitig qualitativ hochwertige Produkte herstellen zu können. Es ist bekannt, dass das Erwärmen bzw. Abkühlen des Blasformwerkzeugs mittels eines geeigneten Fluids, beispielsweise Wassers, das in Kanälen, Fräsungen und Bohrungen des Blasformwerkzeugs unter Druck zirkuliert wird, erfolgen kann. Zur Erzielung möglichst kurzer Zykluszeiten wird das Heiz-/Kühlfluid mit relativ hohem Druck durch die Kanäle, Fräsungen und Bohrungen geleitet. Damit das Blasformwerkzeug diesen hohen Drücken standhält, muss es umso massiver ausgebildet werden. In Verbindung mit den guten Wärmeleiteigenschaften der für das Blasformwerkzeug verwendeten Materialien ergibt sich daraus jedoch ein noch höherer Aufwand für das periodische Aufheizen und Abkühlen des Blasformwerkzeugs. Ausserdem erhöht sich durch die massivere Ausbildung des Blasformwerkzeugs auch der für das periodische Öffnen und Schliessen der Blasformhälften erforderliche Aufwand.

Aufgrund der mangelnden Wirtschaftlichkeit wurde bis anhin darauf verzichtet, die Formen auf die vorliegend beschriebenen bevorzugten Temperaturen aufzuheizen. Der Aufwand, um die eingetragene Wärme wieder auszubringen ist enorm und bedingt eine sehr hohe Kühlleistung. Zudem verlängert dies die Zykluszeit, da bis zum Entformen gewartet werden muss, bis die gesamte Temperaturdifferenz abgebaut ist. Dabei wurde in Kauf genommen, dass die fertigen Oberflächen der produzierten Behälter aufgrund der zu grossen Temperaturdifferenz Mängel aufweisen können. Vielfach werden derartige Behälter mit einer aufgeschrumpften Umverpackung versehen, sodass diese Mängel verdeckt bleiben.

Blasformen, die das durchgehende und gleichmässige Kühlen ermöglichen, wurden mit der US 2010/0252963 A1 und der WO 00/27612 A1 bekannt.

Es ist daher eine Aufgabe der Erfindung zumindest einen oder mehrere Nachteile des Standes der Technik zu beheben. Insbesondere soll ein Blasformwerkzeug und/oder ein Verfahren zur thermischen Behandlung eines Teilbereichs einer Oberfläche eines Kunststoffbehälters bereitgestellt werden mit dem es ermöglicht ist, Oberflächen und/oder Behälterteile während des Herstellungsprozesses mit einem bestimmten Temperaturprofil zu versehen. Vorzugsweise werden die Zykluszeiten gegenüber dem Stand der Technik nicht verlängert und die Produktionskosten tief gehalten.

Diese Aufgabe wird durch die in den unabhängigen Patentansprüchen definierten Vorrichtungen und Verfahren gelöst. Weitere Ausführungsformen ergeben sich aus den abhängigen Patentansprüchen.

Ein erfindungsgemässes Blasformwerkzeug für eine Blasformmaschine, insbesondere ein Extrusionsblasformwerkzeug, weist zumindest eine erste Blasformhälfte und eine zweite Blasformhälfte auf. Die erste Blasformhälfte weist eine Grundplatte und einen Formkörper auf. Im Formkörper ist wenigstens ein Formnest mit einer Innenwandung angeordnet. Zumindest ein Bereich der Innenwandung des Formnestes weist in seinem zugehörigen Abschnitt des Formkörpers separate Temperierkanäle zum Temperieren dieses Bereichs auf. Der Bereich der Innenwandung ist definitionsgemäss ebenfalls ein Teil der Innenwandung.

Das Vorsehen von separaten Temperierkanälen ermöglicht das gezielte Temperieren, also das Aufwärmen oder Abkühlen, eines Teilbereichs des Formnestes, also des Bereiches der Innenwandung. Dies ermöglicht einerseits diesen Bereich unabhängig von dem restlichen Formkörper zu Temperieren. Andererseits ist durch die Ausbildung des Bereichs als ein separat temperierter Teilbereich dieser im Verhältnis zum Formnest kleiner und weist somit eine geringere Masse auf. Dies ermöglicht das sehr schnelle Aufheizen oder das sehr schnelle Abkühlen dieses Bereichs.

Unter einem zugehörigen Abschnitt wird definitionsgemäss ein zur Innenwandung abgewandter Teilbereich des Formkörpers verstanden, der im Formkörper hinter dem Bereich angeordnet ist.

Es versteht sich von selbst, dass auch mehrere Bereiche möglich sind die jeweils alle in ihrem zugehörigen Abschnitt des Formkörpers separate Temperierkanäle aufweisen.

Dies ermöglicht das unabhängige Temperieren von mehreren Teilbereichen eines Formnestes. Dabei kann ein entsprechendes Temperaturprofil eines ersten Bereichs sowohl zeitlich als auch bezüglich der Temperatur unterschiedlich zum Temperaturprofil eines zweiten Teilbereichs gefahren werden.

Alternativ ist es auch möglich, mehrere Bereiche vorzusehen, die jeweils in ihrem zugehörigen Abschnitt des Formkörpers separate Temperierkanäle aufweisen, wobei jedoch diese einen oder mehrere Bereiche einen gemeinsamen, jedoch vom restlichen Formkörper unabhängigen, Temperierkreislauf aufweisen.

Dies stellt sicher, dass die mehreren Bereiche ein gemeinsames Temperaturprofil aufweisen.

Wie bereits dargelegt ist die aufzuheizende bzw. wieder abzukühlende Masse deutlich reduziert und ist das Aufheizen bzw. Abkühlen im Wesentlichen nur noch auf den Bereich und seinen zugehörigen Abschnitt selbst reduziert. Dadurch ist ein sehr viel geringerer Energieaufwand für das Aufheizen bzw. das Abkühlen des Bereichs nötig. Wegen der geringeren Masse können das Aufheizen und das Abkühlen des Formkörpers in einer relativ kurzen Zeit bewerkstelligt werden. Insbesondere ist ein Aufheizen oder Abkühlen mit einer Geschwindigkeit von 5 K/s vorzugsweise 15 K/s und besonders bevorzugt 30 K/s oder mehr ermöglicht. Die beheizten und in unmittelbarer Folge wieder gekühlten Oberflächen der Formnester erlauben in Verbindung mit polierten formgebenden Oberflächen des Bereichs und den kurzen Abkühlungszeiten auch die Herstellung von Kunststoffbehältern mit glänzenden Oberflächen an den jeweiligen Stellen.

Polierte Oberflächen sind Oberflächen, die beispielsweise mittels Polituren bearbeitet wurden und eine geringe Menge von Material abgetragen wurde, um eine entsprechende Oberfläche durch Abtragen von Rauheitsspitzen zu glätten und an dieser Oberfläche gegebenenfalls Glanz zu erzeugen. Von polierten Oberflächen wird typischerweise ab Mittenrauwerten von 0.8 µm gesprochen.

Der Glanz von Oberflächen wird mittels Reflektometern in sogenannten "gloss units" (GU) ausgedrückt. Vorliegend wird von Glanz gesprochen, wenn der Glanz 10 GU's überschreitet. Die Messung wird nach ISO 2813 durchgeführt. Für ganz oder teilweise transparente Objekte wird kein Reflektometer verwendet, sondern der Reflexionsgrad also der Quotient aus reflektiertem zu eingestrahltem Licht, für einen bestimmten Winkel angegeben. Bei ganz oder teilweise transparenten Kunststoffen wird von Glanz gesprochen, wenn der Reflexionsgrad 20% übersteigt.

Durch die erfindungsgemässe Ausbildung des Blasformwerkzeugs können sogar mit Kunststoffen, wie z.B. Polyolefinen, bei denen es bekanntermassen sonst ohne zusätzliche Arbeitsschritte, wie beispielsweise einem mehrschichtigen Aufbau des Behälters beziehungsweise des Vorformling, bei dem die äusserste Schicht, die einen Glanz hervorrufen soll, niedrigviskos ist und zum Erreichen der geringen Viskosität unterschiedliche Zuschlagstoffe enthält, nicht möglich ist, solche glänzenden Oberflächen erzielt werden. Bei entsprechender Ausgestaltung der Oberflächen des Bereichs können auch Kunststoffbehälter mit zumindest in Teilbereichen strukturierten Oberflächen hergestellt werden. Somit sind bei entsprechender Gestaltung der Oberflächen sogar Behälter herstellbar, die Oberflächen aufweisen, welche in Teilbereichen des Bereichs glänzend und in anderen Teilbereichen des Bereichs strukturiert ausgebildet sind.

Strukturiert heisst vorliegend, dass die Oberfläche des Behälters im Wesentlichen dem Negativ des Formkörpers entspricht, wobei die Abweichung zwischen dem Negativ und der späteren Oberfläche 15% nicht überschreitet, vorzugsweise 10% nicht überschreitet und besonders bevorzugt 5% nicht überschreitet.

Es versteht sich von selbst, dass bei Bezug auf das Formnest in einer Blasformhälfte lediglich der Teil des Formnestes gemeint ist, der sich auch in der jeweiligen Blasformhälfte befindet. Erst durch das Zusammenfügen der Blasformhälften (oder Teile, wenn das Blasformwerkzeug mehr als zweiteilig ist) ist das ganze Formnest zur Verfügung gestellt. Das Formnest entspricht im Wesentlichen dem Negativ des späteren Kunststoffbehälters.

Es kann vorgesehen sein, dass der Bereich mit seinem zugehörigen Abschnitt an einem zum Formkörper gesondert ausgebildeten Formteil ausgebildet ist.

Dies ermöglicht einerseits die separate Fertigung des zugehörigen Abschnitts und der darin enthaltenen Temperierkanäle, andererseits ist durch die separate Ausbildung eine von der Oberfläche der restlichen Innenwandung unterschiedlich gestaltete Ausbildung der Oberfläche des Bereichs ermöglicht.

Ausserdem ist die Wartung des Blasformwerkzeugs erleichtert. Es ist zu erwarten, dass durch schnelle Wechsel von Temperaturprofilen der Bereich und der dazugehörige Abschnitt des Formwerkzeugs mehr belastet wird als das restliche Blasformwerkzeug und entsprechend dieser Bereich mit seinem zugehörigen Abschnitt früher Verschleiss zeigt. Durch die separate Ausbildung ist es ermöglicht, diesen verschlissenen Bereich durch Austausch des Formteils auszutauschen und das Blasformwerkzeug instand zustellen.

Das Formteil kann aus Aluminium oder einer Legierung davon ausgebildet sein. Aluminium hat einen kleineren Wärmeausdehnungskoeffizienten im Vergleich zu Stahl. Dies führt dazu, dass ein, in einem Formkörper aus Stahl angeordneten, Formteil aus Aluminium Spannungen, hervorgerufen durch Wärmeausdehnung, im Vergleich zu einer Kombination Stahl-Stahl verringert werden.

Es kann zudem vorgesehen sein, dass zwischen dem Formteil und dem Formkörper ein Isolationselement aus einem thermisch isolierenden Material angeordnet ist. Je nach Ausgestaltung des Formteils wird auch von einem Isolationsblock gesprochen.

Die aufzuheizende bzw. abzukühlende Masse des Bereichs und seines zugehörigen Abschnitts ist somit vom restlichen Formkörper zumindest teilweise thermisch entkoppelt. Diese reduziert den Wärmeübergang vom Formteil auf den Formkörper und reduziert damit die Masse die abzukühlen, bzw. aufzuheizen ist. Diese reduziert einerseits den Energieaufwand und andererseits ermöglicht es, bei gleichem Energieaufwand den Bereich schneller abzukühlen bzw. aufzuheizen.

Das Isolationselement kann aus einem duroplastischen, hochtemperaturbeständigen Kunststoff mit geringer Wärmeleitfähigkeit bestehen.

Dies ermöglicht eine hohe Standdauer und verhindert ungewollte Wärmeströme.

Diese Kunststoffe zeichnen sich durch ihre sehr geringe Wärmeleitfähigkeit aus, die je nach Art des Kunststoffs nur 0,1 - 0,8 W/mK beträgt. Für den Einsatz in Verbindung mit Blasformwerkzeugen gemäss der Erfindung sind insbesondere Kunststoffe aus der Gruppe bestehend aus Polyaryletherketonen, wie z.B. Polyetheretherketon (PEEK), Polyamiden, glasfaserverstärkten Kunststoffen und verstärkten Duroplasten mit einer Temperaturbeständigkeit bis mindestens 200°C bevorzugt. Es kann sich dabei insbesondere um einen harten Kunststoff oder ein hartes Kunststoffverbundmaterial handeln. Als harte Kunststoffe werden vorliegend Kunststoffe berücksichtigt, die eine Härte von mindestens 75 Shore aufweisen.

Dies ermöglicht das passgenaue Fertigen und verhindert zudem, dass während des Betriebes durch hohe Drücke hervorgerufene Deformationen entstehen.

Zur Versorgung der Temperierkanäle kann zwischen der Grundplatte und dem Formkörper ein Verteilerblock angeordnet sein.

Ein Verteilerblock ermöglicht das gezielte Zuführen eines Temperiermediums, also eines Heiz- oder Kühlmediums, zu den Temperierkanälen. Ebenfalls kann durch einen Verteilerblock ein Austauschelement geschaffen werden, welches es ermöglicht, durch einfachen Austausch des Verteilerblocks mehrere Temperierkanäle miteinander, also gemeinsam, zu beaufschlagen oder aber alternativ auch einen oder mehrere Bereiche separat mit einem Temperiermedium zu beaufschlagen.

Der Verteilerblock kann aus Aluminium oder einer Legierung davon ausgebildet sein. Die entsprechenden Vorteile einer derartigen Materialwahl sind im Bezug zum Formteil bereits erwähnt und treffen ebenfalls auf die Ausbildung des Verteilerblocks zu.

Der Verteilerblock kann Anschlüsse für die Zu- und Abfuhr eines Heiz-/Kühlmediums, also eines Temperiermediums, zu den Temperierkanälen aufweisen.

Durch die Anordnung der Anschlüsse am Verteilerblock können diese einfach gewartet werden. Die Herstellung ist ebenfalls vereinfacht da ein Verteilerblock typischerweise eine Erstreckung bis an die Aussenbereiche des Blasformwerkzeugs aufweist und die Anschlüsse entsprechend einfach zugänglich sind.

Dabei kann vorgesehen sein, dass am Verteilerblock mehrere Anschlüsse zur Versorgung von mehreren Temperierkanälen angeordnet sind und diese jeweils separat ausgebildet sind. Dies ermöglicht das separate Beaufschlagen von unterschiedlichen Temperierkanälen. Durch den Austausch des Verteilerblocks ist es möglich, schnell und unkompliziert einen Verteilerblock einzufügen der lediglich einen einzelnen Satz Anschlüsse aufweist und der sämtliche vorhandenen Temperierkanäle miteinander verbindet, sodass diese gleichzeitig beaufschlagt werden können.

Der Formkörper kann mehrteilig ausgebildet sein und einen Halseinsatz und/oder einen Bodenteil aufweisen. Entsprechend kann der Formkörper ein Mittelteil aufweisen.

Dies erleichtert die Fertigung und ebenfalls die Wartung des Blasformwerkzeugs. So ist es beispielsweise möglich, den gesamten Halseinsatz und/oder den Bodenteil und/oder den Mittelteil als ein Bereich auszubilden der separate Temperierkanäle aufweist. Vorzugsweise ist jedoch zumindest in einem Bestandteil des Formkörpers, also beispielsweise im Halseinsatz und/oder ihm Bodenteil, vorzugsweise im Mittelteil, ein Bereich mit einem zugehörigen Abschnitt ausgebildet, der separate Temperierkanäle aufweist.

Die Grundplatte kann aus rostfreiem Stahl ausgebildet sein. Die Ausbildung aus Stahl stellt sicher dass die Grundplatte die auftretenden Kräfte aufnehmen kann. Die Eigenschaft dass der Stahl rostfrei ist verhindert eine frühzeitige Korrosion der Grundplatte.

Der Formkörper kann aus Aluminium oder einer Legierung davon ausgebildet sein.

Da Aluminium einen relativ geringen Wärmeausdehnungskoeffizienten aufweist ist eine hohe Formtreue des Blasformwerkzeugs über einen breiten Temperaturbereich ermöglicht.

Die Temperierkanäle können als eine Bohrung ausgebildet sein. Dabei ist vorzugsweise innerhalb der Bohrung ein konzentrisch angeordnetes Rohr angeordnet sodass sich zwischen dem Rohr und der Bohrung als Temperierkanal ein Ringsspalt ausbildet.

Durch den Ringsspalt kann also beispielsweise das Temperiermedium in den zugehörigen Abschnitt des Bereichs eingebracht werden und durch das Rohr wieder ausgebracht werden, respektive durch das Rohr eingebracht und durch den Ringsspalt wieder ausgebracht werden. Die Fertigung der Temperierkanäle in dieser Art ist einfach, kostengünstig und schnell. Beim Versagen eines Rohres kann dieses einfach ausgetauscht werden.

Eine Wandstärke zwischen dem Temperierkanal und dem Bereich beträgt mindestens 1.5 mm und höchstens 12 mm. Der Bereich ist Teil der Oberfläche der Innenwandung, mit anderen Worten, eine Materialstärke zwischen der geblasenen Form und dem Temperiermedium beträgt 1.5 mm bis 12 mm.

Diese Dimensionierung garantiert einerseits eine Mindestfestigkeit hervorgerufen durch die Mindestwandstärke und andererseits einen Wärmeleitwiderstand der durch die maximale Abmessung dieser verbleibenden Wandstärke begrenzt ist. Entsprechend dynamisch kann der Bereich temperiert werden.

Der Bereich kann eine strukturierte Oberfläche aufweisen. Dies ermöglicht eine entsprechende Abbildung der Struktur auf dem Behälter.

Die zweite Blasformhälfte des Blasformwerkzeuges ist vorzugsweise entsprechend der ersten Blasformhälfte ausgebildet.

Der Ausdruck Blasformhälfte ist nicht auf eine mathematische Teilung beschränkt. Bei asymmetrischen Kunststoffbehältern kann die Trennstelle versetzt sein, dennoch wird von Hälften gesprochen. Ebenso kann das Blasformwerkzeug mehrteilig, beispielsweise dreiteilig ausgebildet sein. Eine Blasformhälfte entspricht dann einem Teil der Blasformwerkzeuges, das durch eine erste und zweite Trennebene gegenüber weiteren Teilen des Blasformwerkzeuges abgegrenzt ist.

Ein weiterer Aspekt der Erfindung betrifft eine Extrusionsblasformmaschine aufweisend ein Blasformwerkzeug wie vorliegend beschrieben.

Die Extrusionsblasformmaschine kann gemeinsam mit dem Blasformwerkzeug konfiguriert werden, sodass die optimalen, also aufeinander abgestimmten, Prozessparameter erreicht werden und somit entsprechend kurze Zykluszeiten.

Ein weiterer Aspekt der Erfindung betrifft ein Verfahren zur thermischen Behandlung eines Teilbereichs einer Oberfläche eines Kunststoffbehälters mit einem Blasformwerkzeug, insbesondere mit einem Blasformwerkzeug wie vorliegend beschrieben. Das Verfahren umfasst die Schritte:
- Aufheizen eines Bereichs eines Formnests eines Formkörpers einer ersten Blasformhälfte des Blasformwerkzeuges durch Zuführung eines Heizmediums durch separate Temperierkanäle,
- Einbringen eines Vorformlings in das Formnest,
- Schliessen des Blasformwerkzeugs
- Formen des Kunststoffbehälters durch Aufblasen des Vorformlings und durch Anlegen des Vorformlings an die Innenwandung des Formnestes
- Abkühlen des Bereichs durch Zuführung eines Kühlmediums durch die Temperierkanäle
- Entformen des Kunststoffbehälters.

Das Heizmedium und das Kühlmedium können identisch sein jedoch weisen sie entsprechend ihres Zweckes unterschiedliche Temperaturen auf. Entsprechend wird allgemein von einem Temperiermedium gesprochen.

Das vorliegende Verfahren ermöglicht das gezielte Temperieren eines Bereichs des aufgeblasenen Kunststoffbehälters wobei in diesem Bereich ein gegenüber dem restlichen Formnest unterschiedliches Temperaturprofil gefahren werden kann. Dies ermöglicht insbesondere das schnelle Aufheizen und das schnelle Abkühlen des entsprechenden Bereichs, sodass der entsprechende Bereich vor dem Einbringen des Vorformlings in das Formnest im Wesentlichen eine Temperatur aufweist, die der Temperatur des Vorformlings entspricht und diese Temperatur nach dem Aufblasen ohne wesentliche Verlängerung der Zykluszeit auf die Entformtemperatur gekühlt werden kann.

Das schnelle Aufheizen und das schnelle Abkühlen auf die gewünschten Temperaturen ermöglicht das passgenaue Übertragen von Strukturen aus dem Formnest auf die Oberfläche des aufgeblasenen Kunststoffbehälters. Dabei kann es sich bei den Strukturen sowohl um strukturierte Oberflächen handeln als auch um polierte Oberflächen. Mit anderen Worten ermöglicht das vorliegende Verfahren das Übertragen einer Struktur von dem Formnest auf die Oberfläche des Behälters mit einer Abweichung von weniger als 15 %, vorzugsweise weniger als 10% und besonders bevorzugt weniger als 5% gegenüber der Negativstruktur.

Durch das Temperieren lediglich eines Bereichs des Formnestes ist ein Verfahren geschaffen, das die Zykluszeit nur unwesentlich verlängert, da das restliche Formnest nicht zwingend auf die optimalen Temperaturen aufgeheizt werden muss und beispielsweise kontinuierlich gekühlt werden kann. Dies betrifft insbesondere Bereiche die später am Kunststoffbehälter nicht sichtbar sind und damit eine geringere Genauigkeit oder Oberflächenbeschaffenheit aufweisen können.

Es kann dabei vorgesehen sein, dass der Bereich während des Formens des Kunststoffbehälters eine Temperatur aufweist, die gegenüber der verbleibenden Innenwandung des Formnestes erhöht ist. Entsprechend wird der Bereich des Kunststoffbehälters der auf dem Bereich zum Anliegen kommt mit einem anderen Temperaturprofil gefahren. Dies ermöglicht unterschiedliche Oberflächenbeschaffenheiten am Kunststoffbehälter hervorgerufen durch die Temperaturunterschiede.

Vorzugsweise weist der Bereich beim Abkühlen eine mittlere Abkühlungsgeschwindigkeit von mindestens 5 K/s auf, bzw. wird mit einer Abkühlungsgeschwindigkeit von mindestens 5 K/s gekühlt, vorzugsweise 15 K/s und besonders bevorzugt 30 K/s.

Dies begünstigt eine schnelle und damit passgenaue Erstarrung des Kunststoffbehälters in Bereichen die mit dem Bereich der Innenwandung des Formnestes in Kontakt sind.

Vorzugsweise wird der Formkörper während des Abkühlens des Bereichs ebenfalls gekühlt.

Dies verhindert ein Überhitzen des Blasformwerkzeugs.

Vorzugsweise wird als Heizmedium und als Kühlmedium entsprechend temperiertes Wasser eingesetzt.

Wasser verfügt über eine relativ hohe Wärmekapazität und ermöglicht das kostengünstige und dennoch schnelle Zuführen von Wärme oder Kälte in die Temperierkanäle des dem Bereich zugehörigen Abschnittes des Formkörpers.

Vorzugsweise besteht der Vorformling im Wesentlichen aus einem Polyolefin. Das Heizmedium wird mit einer Temperatur von 120 °C bis 200 °C und vorzugsweise mit 160 °C zugeführt und das Kühlmedium wird mit einer Temperatur von 5 °C bis 40 °C, vorzugsweise 15 °C, zugeführt.

Es hat sich gezeigt, dass diese Prozessparameter insbesondere auf das Bereitstellen des entsprechenden Temperiermediums einen positiven Einfluss haben, da diese Temperaturen relativ kostengünstig erreicht werden können.

Anhand von schematischen Figuren ist nachfolgend exemplarisch ein Ausführungsbeispiel eines Blasformwerkzeuges näher erläutert. Es zeigt:
- Figur 1:: ein Blasformwerkzeug aus dem Stand der Technik mit zwei Blasformhälften;
- Figur 2:: eine erste Blasformhälfte;
- Figur 3:: eine vertikale Schnittansicht durch die Blasform-hälfte der Figur 2.

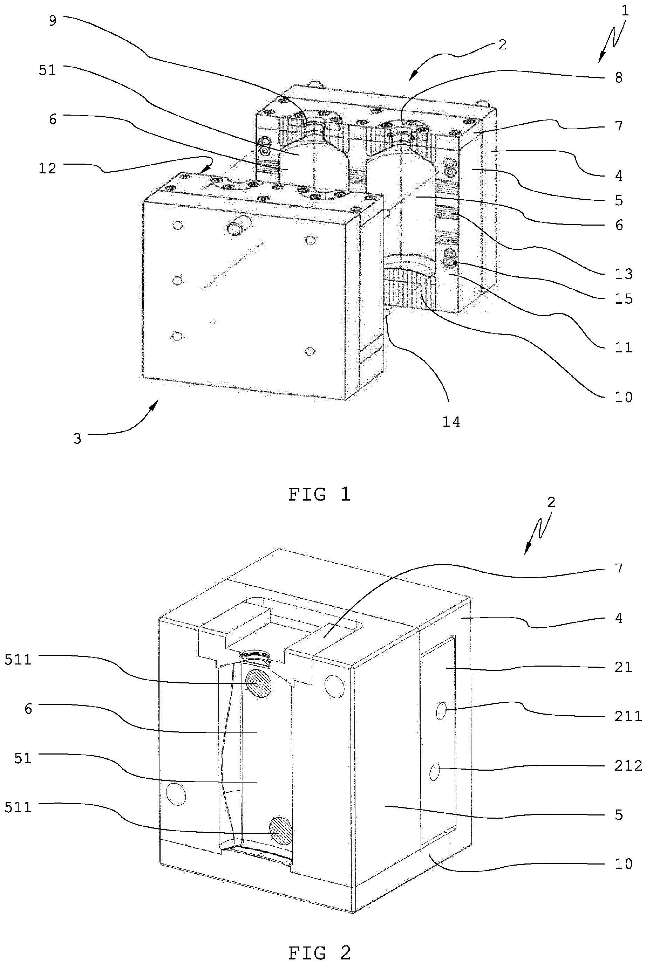

Die Figur 1 zeigt ein Blasformwerkzeug 1 aus dem Stand der Technik zur Erläuterung des prinzipiellen Aufbaus eines derartigen Werkzeugs. Das gesamthaft mit dem Bezugszeichen 1 versehene Blasformwerkzeug weist eine erste Blasformhälfte 2 und eine zweite Blasformhälfte 3 auf. Diese sind vorliegend relativ zueinander lateral verschiebbar, um das Blasformwerkzeug 1 periodisch zu öffnen und wieder zu schliessen. Jede Blasformhälfte 2, 3 umfasst eine Grundplatte 4, die einen Teil einer Schliesseinheit einer Blasformmaschine bildet. Auf der Grundplatte 4 ist ein Formkörper 5 montiert, in dem ein oder mehrere Formnester 6 ausgebildet sind. Gemäss dem dargestellten Ausführungsbeispiel weist der Formkörper 5 zwei Formnester 6 auf, die je eine Hälfte der Form eines Körpers eines Kunststoffbehälters festlegen. Da sich die Formnester entsprechen sind zur besseren Übersichtlichkeit nicht beide Formnester mit allen Bezugszeichen versehen obschon die Ausführungen jeweils für beide Formnester gelten.

Eine Kopfplatte 7 ist mit einer Kavität 8 zur Festlegung eines Halsabschnitts des Kunststoffbehälters ausgestattet. Im Fall eines Blasformwerkzeugs für eine Extrusionsblasformmaschine kann an der Kopfplatte 7 auch noch ein Halsmesser 9 für das Abtrennen eines in das Blasformwerkzeug 1 eingesetzten extrudierten Kunststoffschlauchs vorgesehen sein. Ein Bodenteil 10 schliesst die Formnester 6 am anderen Ende des Blasformwerkzeugs 1 ab. An den einander zugewandten Oberflächen 11, 12 der Blasformhälften 2, 3, welche eine Trennebene des Blasformwerkzeugs 1 festlegen, können Entlüftungsschlitze 13 ausgebildet sein. An einer der Blasformhälften 3 sind Führungsbolzen 14 ausgebildet, die beim Schliessen der Blasformhälften 2, 3 in Führungsbuchsen 15 der anderen Blasformhälfte 2 gleiten. Der Formkörper 5 weist eine Wandungsfläche, also eine Innenwandung 51 auf, die einen Teil des Formnestes 6 bildet.

Die Figur 2 zeigt eine erste Blasformhälfte 2 eines erfindungsgemässen Blasformwerkzeuges. Die Blasformhälfte 2 weist eine Grundplatte 4 auf. Auf der Grundplatte 4 angeordnet ist ein Verteilerblock 21 mit zwei Anschlüssen 211 und 212 zum Zuführen eines Temperiermediums. Auf dem Grundkörper 4 angeordnet ist ein Formkörper 5 sowie eine Bodenteil 10 welches an den Formkörper 5 anschliesst. Im Formkörper 5 eingelassen ist eine Kopfplatte 7.

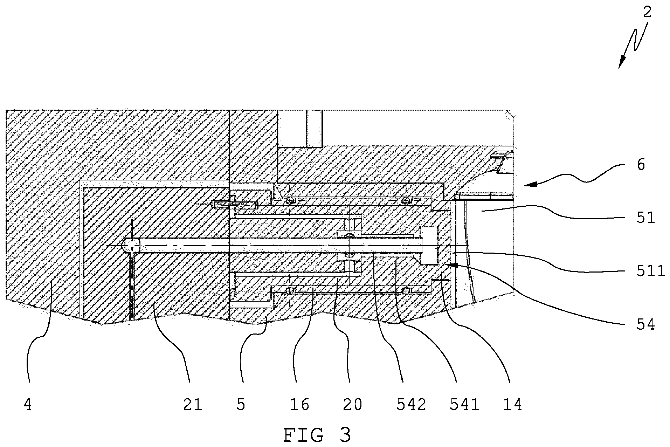

Die Gesamtheit aus Formkörper 5, Bodenteil 10 und Kopfplatte 7 stellt ein Formnest 6 bereit. Als Teil des Formnestes 6 weist der Formkörper 5 eine Innenwandung 51 auf. Die Innenwandung 51 weist zwei Bereiche 511 auf wobei jedem Bereich 511 ein zugehöriger Abschnitt mit separaten Temperierkanälen 54 (siehe dazu Figur 3) zugeordnet ist. Die Temperierkanäle 54 sind über den Verteilerblock 21 mit den Anschlüssen 211 und 212 verbunden.

Die Figur 3 zeigt eine vertikale Schnittansicht durch einen der Bereiche 511 aus der Figur 2. Aus dieser Schnittansicht ist ersichtlich, dass der Bereich 511 als Teil der Innenwandung 51 ausgebildet ist. Der Bereich 511 weist einen zugehörigen Abschnitt auf der als zum Formkörper 5 gesondert ausgebildetes Formteil 20 ausgebildet ist. Das Formteil 20 ist an seinem dem Formnest 6 zugewandten Ende in den Formkörper 5 eingebettet und nachfolgend, in Richtung der Grundplatte 4, mit einem Isolationselement 16 zu dem Formkörper 5 beabstandet. Zur besseren Isolation ist das Isolationselement 16 zusätzlich mit zwei O-Ringen vom Formkörper 5 beabstandet.

Innerhalb des Formteils 20 sind die Temperierkanäle 54 ausgebildet. Dazu ist im Formteil 20 eine Bohrung 541 vorgesehen in die ein Rohr 542 mündet bzw. diese Bohrung 541 ihrer Länge nach durchdringt, sodass zwischen dem Rohr 542 unter Innenwandung der Bohrung 541 ein ringförmiger Spalt entsteht durch welche das Temperiermedium in die Nähe des Bereichs 511 geführt werden kann, bzw. aus diesem abgeführt werden kann. Das Rohr 542 mündet in einen entsprechenden Kanal am Verteilerblock 521 und entsprechend mündet der ringförmige Spalt in einen weiteren Kanal am Verteilerblock 21. Diese Kanäle münden entsprechend in den Anschlüssen 211 und 212 (siehe Figur 2).

Der Kühlkanal 54 weist an seinem benachbart zum Bereich 511 liegenden Ende eine Erweiterung auf, sodass der Kühlkanal 54 eine Kammer bildet. Diese Kammer verbindet den Ringspalt und das Rohr, sodass ein Kühlkreislauf bereitgestellt werden kann. Die Kammer ist mit einer Wandstärke zum Formnest 6 beabstandet die im vorliegenden Fall 3 mm beträgt. Dies stellt sicher, dass die Wärme die diese Wandstärke beispielsweise nach dem Blasformen aufweist, schnell abgeführt werden kann, bzw., dass die Wandstärke mit einem geeigneten Heizmedium schnell aufgewärmt werden kann, sodass ihre Temperatur im Wesentlichen jener des Vorformlings entspricht, der in das Formnest 6 zum Blasformen eingeführt wird.

Bei dem Verfahren zur Herstellung eines Kunststoffbehälters und zur thermischen Behandlung eines Teilbereiches eines Kunststoffbehälters, welches übergreifend über alle Figuren beschrieben ist, wird zuerst der Bereich 511 des Formnests 6 des Formkörpers 5 einer ersten Blasformhälfte 2 des Blasformwerkzeuges 1 durch Zuführung eines Temperiermediums durch separate Temperierkanäle 54 aufgeheizt. Anschliessend wird der Vorformling in das Formnest 6 eingebracht. Nachfolgend wir das Blasformwerkzeug 1 geschlossen und der Kunststoffbehälters durch Aufblasen des Vorformlings und durch Anlegen des Vorformlings an die Innenwandung 51 des Formnestes 6 geformt. Nach dem Formen wird der Bereich durch Zuführung eines Kühlmediums durch die Temperierkanäle 54 gekühlt und beim Erreichen einer bestimmten Kühltemperatur der Kunststoffbehälter entformt.

## Patentansprüche

1. Blasformwerkzeug (1) für eine Blasformmaschine (1), insbesondere ein Extrusionsblasformwerkzeug, aufweisend
zumindest eine erste Blasformhälfte (2) und eine zweite Blasformhälfte (3),
wobei die erste Blasformhälfte (2) eine Grundplatte (4) und einen Formkörper (5) aufweist,
wobei im Formkörper (5) wenigstens ein Formnest (6) mit einer Innenwandung (51) angeordnet ist,
**dadurch gekennzeichnet, dass**
zumindest ein Bereich (511) der Innenwandung (51) des Formnestes (6) in seinem zugehörigen Abschnitt des Formkörpers (5) separate Temperierkanäle (54) zum Temperieren des Bereichs (54) aufweist.

2. Blasformwerkzeug (1) nach Anspruch 1,
**dadurch gekennzeichnet, dass**
der Bereich (511) mit seinem zugehörigen Abschnitt an einem zum Formkörper (5) gesondert ausgebildeten Formteil (20) ausgebildet ist.

3. Blasformwerkzeug (1) nach Anspruch 2,
**dadurch gekennzeichnet, dass**
das Formteil (20) aus Aluminium oder einer Legierung davon ausgebildet ist.

4. Blasformwerkzeug (1) nach Anspruch 2 oder 3,
**dadurch gekennzeichnet, dass**
zwischen dem Formteil (20) und dem Formkörper (5) ein Isolationselement (16) aus einem thermisch isolierenden Material angeordnet ist.

5. Blasformwerkzeug (1) nach einem der Ansprüche 1 bis 4,
**dadurch gekennzeichnet, dass**
das Isolationselement (16) aus einem duroplastischen, hochtemperaturbeständigen Kunststoff mit geringer Wärmeleitfähigkeit besteht.

6. Blasformwerkzeug (1) nach einem der Ansprüche 1 bis 5,
**dadurch gekennzeichnet, dass**
zwischen der Grundplatte (4) und dem Formkörper (5) ein Verteilerblock (21) zur Versorgung der Temperierkanäle (54) angeordnet ist.

7. Blasformwerkzeug (1) nach einem der Ansprüche 1 bis 6,
**dadurch gekennzeichnet, dass**
der Verteilerblock (21) aus Aluminium oder einer Legierung davon ausgebildet ist.

8. Blasformwerkzeug (1) nach einem der Ansprüche 6 oder 7,
**dadurch gekennzeichnet, dass**
der Verteilerblock (21) Anschlüsse für die Zu- und Abfuhr eines Heiz-/Kühlmediums zu den Temperierkanälen (54) aufweist.

9. Blasformwerkzeug (1) nach einem der Ansprüche 1 bis 8,
**dadurch gekennzeichnet, dass**
der Formkörper (5) mehrteilig ausgebildet ist und einen Halseinsatz (18) und/oder ein Bodenteil (10) aufweist.

10. Blasformwerkzeug (1) nach einem der Ansprüche 1 bis 9,
**dadurch gekennzeichnet, dass**
die Grundplatte (4) aus rostfreiem Stahl ausgebildet ist.

11. Blasformwerkzeug (1) nach einem der Ansprüche 1 bis 10,
**dadurch gekennzeichnet, dass** der Formkörper (5) aus Aluminium oder einer Legierung davon ausgebildet ist.

12. Blasformwerkzeug (1) nach einem der Ansprüche 1 bis 11,
**dadurch gekennzeichnet, dass**
die Temperierkanäle (54) als eine Bohrung (541) ausgebildet sind, wobei innerhalb der Bohrung (541) ein konzentrisch angeordnetes Rohr (542) angeordnet ist, sodass sich zwischen dem Rohr (541) und der Bohrung (542) als Temperierkanal (54) ein Ringspalt ausbildet.

13. Blasformwerkzeug (1) nach einem der Ansprüche 1 bis 12,
**dadurch gekennzeichnet, dass**
eine Wandstärke zwischen dem Temperierkanal (54) und dem Bereich (511) mindestens 1.5 mm und höchstens 12 mm beträgt.

14. Blasformwerkzeug (1) nach einem der Ansprüche 1 bis 13,
**dadurch gekennzeichnet, dass**
der Bereich (511) eine strukturierte Oberfläche aufweist.

15. Extrusionsblasformmaschine aufweisend ein Blasformwerkzeug (1) nach einem der Ansprüche 1 bis 14.

16. Verfahren zur thermischen Behandlung eines Teilbereiches einer Oberfläche eines Kunststoffbehälters mit einem Blasformwerkzeug (1), insbesondere mit einem Blasformwerkzeug (1) gemäss einem der Ansprüche 1 bis 15, umfassend die Schritte
- Aufheizen eines Bereichs (511) eines Formnests (13) eines Formkörpers (5) einer ersten Blasformhälfte (2) des Blasformwerkzeuges (1) durch Zuführung eines Heizmediums durch separate Temperierkanäle (54),
- Einbringen eines Vorformlings in das Formnest (6),
- Schliessen des Blasformwerkzeugs (1)
- Formen des Kunststoffbehälters durch Aufblasen des Vorformlings und durch Anlegen des Vorformlings an die Innenwandung des Formnestes (6)
- Abkühlen des Bereichs (511) durch Zuführung eines Kühlmediums durch die Temperierkanäle (54)
- Entformen des Kunststoffbehälters.

17. Verfahren nach Anspruch 16,
**dadurch gekennzeichnet, dass**
der Bereich (511) während des Formens des Kunststoffbehälters eine Temperatur aufweist, die gegenüber einer Temperatur der verblebenden Innenwandung des Formnestes (6) erhöht ist.

18. Verfahren nach Anspruch 16 oder 17,
**dadurch gekennzeichnet, dass**
der Bereich (511) beim Abkühlen mit einer mittleren Abkühlungsgeschwindigkeit von mindestens 5 K/s, vorzugsweise 15K/s, besonders bevorzugt 30K/s gekühlt wird.

19. Verfahren nach einem der Ansprüche 16 bis 18,
**dadurch gekennzeichnet, dass**
der Formkörper (5) während des Abkühlens des Bereiches (511) ebenfalls gekühlt wird.

20. Verfahren nach einem der Ansprüche 16 bis 19,
**dadurch gekennzeichnet, dass**
als Heizmedium und als Kühlmedium entsprechend temperiertes Wasser eingesetzt wird.

21. Verfahren nach einem der Ansprüche 16 bis 20,
**dadurch gekennzeichnet, dass**
der Vorformling im Wesentlichen aus einem Polyolefin besteht, und dass das Heizmedium mit einer Temperatur von 120° C bis 200° C, vorzugsweise 160° C, und das Kühlmedium mit einer Temperatur von 5° C bis 40° C, vorzugsweise 15° C, zugeführt wird.

## Claims

1. Blow molding tool (1) for a blow molding machine (1), in
particular an extrusion blow-molding tool, comprising at least one first blow mold half (2) and one second blow mold half (3), wherein the first blow mold half (2) comprises a baseplate (4) and a molding body (5), wherein at least one mold cavity (6) with an inner wall (51) is arranged in the molding body (5), **characterized in that**
at least one region (511) of the inner wall (51) of the mold cavity (6) comprises, in its associated section of the molding body (5), separate temperature control channels (54) for controlling the temperature of the region (54).

2. Blow molding tool (1) according to Claim 1, **characterized in that**
the region (511) with its associated section is formed on a molding part (20) which is formed separately from the molding body (5).

3. Blow molding tool (1) according to Claim 2, **characterized in that**
the molding part (20) is made of aluminum or an alloy thereof.

4. Blow molding tool (1) according to Claims 2 or 3,
**characterized in that**
an insulating element (16) made of a thermally insulating material is arranged between the molding part (20) and the molding body (5).

5. Blow molding tool (1) according to any one of Claims 1 to 4, **characterized in that**
the insulating element (16) consists of a thermosetting, high-temperature-resistant plastic with low thermal conductivity.

6. Blow molding tool (1) according to any one of Claims 1 to 5, **characterized in that**
a distributor block (21) for supplying the temperature control channels (54) is arranged between the baseplate (4) and the molding body (5).

7. Blow molding tool (1) according to any one of Claims 1 to 6, **characterized in that**
the distributor block (21) is made of aluminum or an alloy thereof.

8. Blow molding tool (1) according to any one of Claims 6 or 7, **characterized in that**
the distributor block (21) has connections for the supply and discharge of a heating/cooling medium to the temperature control channels (54).

9. Blow molding tool (1) according to any one of Claims 1 to 8, **characterized in that**
the molding body (5) is formed in a plurality of parts and comprises a neck insert (18) and/or a bottom part (10) .

10. Blow molding tool (1) according to any one of Claims 1 to 9, **characterized in that**
the baseplate (4) is made of stainless steel.

11. Blow molding tool (1) according to any one of Claims 1 to 10, **characterized in that** the molding body (5) is made of aluminum or an alloy thereof.

12. Blow molding tool (1) according to any one of Claims 1 to 11, **characterized in that**
the temperature control channels (54) are formed as a hole (541), wherein a concentrically arranged tube (542) is arranged within the hole (541) so that an annular gap forms as a temperature control channel (54) between the tube (541) and the hole (542).

13. Blow molding tool (1) according to any one of Claims 1 to 12, **characterized in that**
a wall thickness between the temperature control channel (54) and the region (511) is at least 1.5 mm and at most 12 mm.

14. Blow molding tool (1) according to any one of Claims 1 to 13, **characterized in that**
the region (511) has a structured surface.

15. Extrusion blow-molding machine comprising a blow molding tool (1) according to any one of Claims 1 to 14.

16. Method for thermally processing a subregion of a surface of a plastic container with a blow molding tool (1), in particular with a blow molding tool (1) according to any one of Claims 1 to 15, comprising the steps of
- heating a region (511) of a mold cavity (13) of a molding body (5) of a first blow mold half (2) of the blow molding tool (1) by supplying a heating medium through separate temperature control channels (54),
- introducing a preform into the mold cavity (6),
- closing the blow molding tool (1),
- shaping the plastic container by inflating the preform and abutting the preform against the inner wall of the mold cavity (6),
- cooling the region (511) by supplying a cooling medium through the temperature control channels (54),
- demolding the plastic container.

17. Method according to Claim 16,
**characterized in that**
during the shaping of the plastic container, the region (511) has a temperature which is higher than a temperature of the remaining inner wall of the mold cavity (6).

18. Method according to Claims 16 or 17,
**characterized in that**
the region (511) is cooled during cooling at an average cooling rate of at least 5 K/s, preferably 15 K/s, particularly preferably 30 K/s.

19. Method according to any one of Claims 16 to 18,
**characterized in that**
the molding body (5) is also cooled during the cooling of the region (511).

20. Method according to any one of Claims 16 to 19,
**characterized in that**
correspondingly temperature-controlled water is used as heating medium and as cooling medium.

21. Method according to any one of Claims 16 to 20,
**characterized in that**
the preform consists substantially of a polyolefin and **in that** the heating medium is supplied at a temperature of 120°C to 200°C, preferably 160°C, and the cooling medium is supplied at a temperature of 5°C to 40°C, preferably 15°C.

## Revendications

1. Outil de moulage par soufflage (1) destiné à une machine de moulage par soufflage (1), en particulier un outil de moulage par extrusion-soufflage, présentant au moins un premier demi-moule de soufflage (2) et un deuxième demi-moule de soufflage (3), le premier demi-moule de soufflage (2) présentant une plaque de base (4) et un corps de moule (5), au moins une cavité (6), dotée d'une paroi interne (51), étant disposée dans le corps de moule (5),**caractérisé en ce que**
au moins une zone (511) de la paroi interne (51) de la cavité (6) présente, dans sa partie associée du corps de moule (5), des canaux de régulation de température (54) séparés, destinés à la régulation de température de la zone (54).

2. Outil de moulage par soufflage (1) selon la revendication 1, **caractérisé en ce que**
la zone (511), avec sa partie associée, est formée sur une partie de moule (20) réalisée séparément par rapport au corps de moule (5).

3. Outil de moulage par soufflage (1) selon la revendication 2, **caractérisé en ce que**
la partie de moule (20) est réalisée en aluminium ou un alliage de celui-ci.

4. Outil de moulage par soufflage (1) selon la revendication 2 ou 3, **caractérisé en ce que**
un élément isolant (16), constitué d'un matériau thermiquement isolant, est disposé entre la partie de moule (20) et le corps de moule (5).

5. Outil de moulage par soufflage (1) selon l'une des revendications 1 à 4, **caractérisé en ce que** l'élément isolant (16) est constitué d'une matière plastique thermodurcissable, résistant aux hautes températures et présentant une faible conductivité thermique.

6. Outil de moulage par soufflage (1) selon l'une des revendications 1 à 5, **caractérisé en ce que** entre la plaque de base (4) et le corps de moule (5), il est prévu un bloc de distribution (21) destiné à l'alimentation des canaux de régulation de température (54).

7. Outil de moulage par soufflage (1) selon l'une des revendications 1 à 6, **caractérisé en ce que** le bloc de distribution (21) est réalisé en aluminium ou un alliage de celui-ci.

8. Outil de moulage par soufflage (1) selon l'une des revendications 6 ou 7, **caractérisé en ce que** le bloc de distribution (21) présente des raccords pour l'arrivée et l'évacuation d'un fluide de chauffage/refroidissement vers les canaux de régulation de température (54).

9. Outil de moulage par soufflage (1) selon l'une des revendications 1 à 8, **caractérisé en ce que** le corps de moule (5) est réalisé en plusieurs parties et présente un insert formant col (18) et/ou une partie de fond (10).

10. Outil de moulage par soufflage (1) selon l'une des revendications 1 à 9, **caractérisé en ce que** la plaque de base (4) est réalisée en acier inoxydable.

11. Outil de moulage par soufflage (1) selon l'une des revendications 1 à 10, **caractérisé en ce que** le corps de moule (5) est réalisé en aluminium ou un alliage de celui-ci.

12. Outil de moulage par soufflage (1) selon l'une des revendications 1 à 11, **caractérisé en ce que** les canaux de régulation de température (54) sont réalisés sous forme de trou (541), un tube (542) étant disposé de façon concentrique à l'intérieur du trou (541), de sorte qu'un espace annulaire se forme en tant que canal de régulation de température (54) entre le tube (541) et le trou (542).

13. Outil de moulage par soufflage (1) selon l'une des revendications 1 à 12, **caractérisé en ce que** une épaisseur de paroi entre le canal de régulation de température (54) et la zone (511) est au minimum de 1,5 mm et au maximum de 12 mm.

14. Outil de moulage par soufflage (1) selon l'une des revendications 1 à 13, **caractérisé en ce que** la zone (511) présente une surface structurée.

15. Machine de moulage par extrusion-soufflage, présentant un outil de moulage par soufflage (1) selon l'une des revendications 1 à 14.

16. Procédé de traitement thermique d'une zone partielle d'une surface d'un récipient en matière plastique, avec un outil de moulage par soufflage (1), en particulier avec un outil de moulage par soufflage (1) selon l'une des revendications 1 à 15, comprenant les étapes suivants :
- chauffage d'une zone (511) d'une cavité (13) d'un corps de moule (5) d'un premier demi-moule de soufflage (2) de l'outil de moulage par soufflage (1), par apport d'un fluide de chauffage à travers des canaux de régulation de température (54) séparés,
- mise en place d'une préforme dans la cavité (6),
- fermeture de l'outil de moulage par soufflage (1),
- mise en forme du récipient en matière plastique par soufflage de la préforme et par application de la préforme contre la paroi interne de la cavité (6),
- refroidissement de la zone (511) par apport d'un fluide de refroidissement à travers les canaux de régulation de température (54),
- démoulage du récipient en matière plastique.

17. Procédé selon la revendication 16, **caractérisé en ce que**
pendant la mise en forme du récipient en matière plastique, la zone (511) présente une température qui est augmentée par rapport à une température de la paroi interne restante de la cavité (6).

18. Procédé selon la revendication 16 ou 17, **caractérisé en ce que**
lors du refroidissement, la zone (511) est refroidie à une vitesse de refroidissement moyenne d'au moins 5 K/s, de préférence 15 K/s, et de manière particulièrement avantageuse de 30 K/s.

19. Procédé selon l'une des revendications 16 à 18, **caractérisé en ce que**
pendant le refroidissement de la zone (511), le corps de moule (5) est également refroidi.

20. Procédé selon l'une des revendications 16 à 19, **caractérisé en ce que**
l'on utilise de l'eau à température régulée en tant que fluide de chauffage et en tant que fluide de refroidissement.

21. Procédé selon l'une des revendications 16 à 20, **caractérisé en ce que**
la préforme est constituée pour l'essentiel d'une polyoléfine, et **en ce que** le fluide de chauffage est apporté à une température allant de 120 °C à 200 °C, de préférence de 160 C, et le fluide de refroidissement est apporté à une température allant de 5 °C à 40 °C, de préférence de 15 °C.
